# EUROPEAN PATENT SPECIFICATION

(11) **EP 2 200 202 B1**
(45) Date of publication and mention of the grant of the patent: **02.03.2016**
(21) Application number: 08022132.8
(22) Date of filing: 19.12.2008
(51) Int. Cl.: H04J 14/02

(54) **Method apparatus network and system for establishing an optical communication link for wavelength division multiplexing transmission**
Verfahren, Vorrichtung, Netzwerk und System zur Herstellung einer optischen Kommunikationsverknüpfung für die Multiplexing-Übertragung mit Wellenlängenaufteilung
Procédé, appareil, réseau et système pour établir un lien de communication optique pour la transmission de multiplexage de division de longueur d'onde

(43) Date of publication of application: 23.06.2010
(73) Proprietor: Xieon Networks S.à r.l., 2633 Senningerberg (LU)
(72) Inventor: Badstieber, Curt, 81379 München (DE); Gottwald, Erich, Dr., 83607 Holzkirchen (DE); Rohde, Harald, Dr., 81673 München (DE); Rosner, Sönke, 82008 Unterhaching (DE); Smolorz, Sylvia, Dr., Mountain View CA 94043 (US); Treyer, Thomas, 81379 München (DE)
(74) Representative: Lucke, Andreas

(56) References cited:
- WO-A-2007/138642
- GB-A- 2 347 570
- JP-A- 2008 092 525
- US-A1- 2006 222 365

## Description

Recently due to the more wide spread use for example of internet applications like internet television or video on demand in addition to a steadily increasing data traffic on the internet due to the increased number of applications and users there exists a demand on the market for access technologies that are able to accommodate an increased number of subscribers while at the same time being able to transport a larger amount of data.

Facing such requirements the currently available copper based access technologies like digital subscriber lines reach their limits and are not able to fulfil the bandwidth demands of the future. A next step in the evolution of access technologies are optical networks, based on fibre optical interconnections which as optical access networks are currently in a phase of being built. Today for instance passive optical networks (PON) in the topology of trees are available. At present a different PON technologies exists which are based on time division multiplexing. As some examples may serve ATM-based, broadband-based, Gigabit-based and Gigabit-Ethernet-based passive optical networks (APON, BPON, GPON, GE-PON).

In order to further increase the transmission capacity of optical fibres, transmission technologies for optical access networks based upon wavelength division multiplexing have been developed. A further improvement of the wavelength division multiplexing technology which is capable of handling a larger number of subscribers in an access network is the ultra dense wave division multiplexing. This technology evolves in two branches, one of which uses optical filters by use of which a subscriber is allocated exactly one wavelength which is filtered from the transmission spectrum by a passive optical filter and may be configured either before delivery at the fibre plant or at the customer premises equipment of the subscriber. As this first branch of the technology is basically static and largely depending on administrative assignment of the respective wavelength to each subscriber and a subsequent tailoring of the involved transmission equipment, there is not much room for improvement of the related technology by automation.

A second branch of the ultra dense wavelength division multiplexing technology relies on tuneable narrowband receivers. Contrary to the technology making use of a passive optical filter this technology relies on a customer premises equipment which is capable of adjusting the received and transmitted wavelength and is able to select the received wavelength with a tuneable narrowband filter. As the related technology is very flexible because standard equipment may be used at the customer premises which can later be adjusted to the proper transmission channel, it is expected, that this technology will play an important role in optical access technology of the future. In order to favour a flexible approach it is not desirable to personalize the tuneable narrowband filter for a specific wavelength in order to configure it for a particular customer premises equipment beforehand. In order to be able to use the equipment in a flexible way an approach making use of a plug and play mechanism, by which the adjustable optical equipment is adjusted once installed at the subscriber is much more favourable.

US 2006/0222365A1 discloses A SCM-PON using WDM which includes: an OLT for transferring downstream data from an external service provider through downstream optical signals and transferring upstream data transferred through upstream optical signals to an outside; an ODN for distributing the downstream optical signals from the OLT and multiplexing the upstream optical signals to the OLT; and a plurality of ONUs for processing the downstream optical signals transferred from the OLT through the ODN and transferring upstream data of subscribers for the OLT through the upstream optical signals, wherein the optical signals between the OLT and the ONUs are divided into wavelength channels with different wavelengths and sub-carrier channels obtained by time-dividing the wavelength channels, and the upstream data and the downstream data are transferred through the sub-carrier channels.

GB-A-2347570 discloses an optical network which comprises a plurality of optical network units and optical source means connected and arranged to transmit light signals to each of the plurality of optical network units.

WO2007/138642 A1 discloses an optical access network system in which a relay station receives a wavelength multiplexed and time-division multiplexed optical signal (WDM optical signal) from an optical network, and the relay station transmits optical signals having specified wavelengths to subscriber units.

JP2008092525 discloses an ONU remote automatic setting method in EPON system, and ONU remote automatic setup system. Present wavelength division multiplexing systems face the severe disadvantage that they have to be controlled in an administrative way at both ends of the optical fibre. Using ultra dense wave division multiplexing technology in access systems will require a more flexible approach to build up the access system in order to provide an efficient way to build up an access network for a large number of subscribers requiring little manpower. Furthermore there is the problem that with customer premises equipment making use of tuneable narrowband receivers there exists no possibility to configure the equipment by an administrator as long as the customer premises equipment is not connected to the optical access network. On the other hand the equipment at the customer premises needs a configuration in order to be able to find a free wavelength on which it is able to transmit and receive signals and to be able to communicate with the optical line termination. In order to solve the contradiction with ultra dense wavelength division multiplexing systems, it would be much beneficial to have a plug and play mechanism in place, which automatically performs the necessary adjustments to connect the customer premises equipment with the optical line termination.

At present however for wavelength division multiplexing systems, both ends of the optical transmission path need to be configured beforehand in order to properly work. It is also known to use a separate wavelength for configuration purposes which in the case of access systems based on ultra dense wave division multiplexing where the only connection to be established is with the subscriber is not useful respectively feasible. Systems making use of ultra dense wave division multiplexing based on passive optical filters as described-above in the first branch of the technology need to be configured before being built in order to be able to establish a communication connection. An approach to perform this configuration task is either to install the required optical filters in the field or to preconfigure selected customer premises equipments before delivering them to the subscribers. Such an approach however requires many error prone administrative tasks and relies much on a use of manpower which is costly.

It is an object of the present invention to provide a method, apparatus and system for establishing an optical communication link for wavelength division multiplexing transmission which facilitate the configuration task are flexible and require less manpower for performing the configuration of an optical connection capable of wave division multiplexing transmission and in particular ultra dense wave division multiplexing transmission.

This object is achieved for an apparatus by an optical line termination according to claim 1, an optical network unit according to claim 3 and an optical network according to claim 5, for a method according to a method for establishing an optical communication link according to claim 6 and for a system by a system for establishing an optical communication link according to claim 18.

Beneficial embodiments of the present invention are specified in the dependent claims.

An optical line termination according to the present invention has the particular advantage, that it is able to broadcast in particular in an unidirectional fashion on a special channel making use of all available wavelengths for optical transmission at the optical line termination because by this structure it represents a minimum configuration that allows to address all optical network units with a tuneable narrowband receiver that are not configured and allows to communicate a usable wavelength or wavelength range, respectively transmission channel.

A further embodiment of the optical termination according to the present invention in an advantageous fashion is capable of storing an identification of an optical network unit in association with the wavelength subset that has been attributed to the respective optical network unit. It thus favourably represents a minimum configuration which is capable of building up a list listing occupied transmission channels and the respectively allocated optical network units.

An optical network unit according to the present invention presents the considerable advantage, that it is capable of adjusting its frequency range for optical communication by wavelength division multiplexing to a first wavelength subset that it receives by a first control signal and thus is capable of automatic self-adjustment and in itself presents a plug and play mechanism to establish an optical communication link.

In a beneficial way a further embodiment of the optical network unit according to the present invention stores its own identification and is capable of transmitting the identification with a second control signal using the first wavelength subset that it has itself adjusted to, because by this mechanism, in an efficient way a collision detection may be provided.

Of particular advantage is an optical network according to the present invention, because it constitutes the minimum configuration for establishing an optical communication link according to the present invention in communicating an available wavelength from the optical line termination to the optical network unit and feeding back the respective identification associated to an occupied communication channel to the optical line termination. In particular this allows building up a list, or a so-called Almanac listing all available wavelengths for communication individually as "free" or as "used".

A method for establishing an optical communication link according to the present invention presents the considerable advantage that it uses all available wavelengths for optical communication in order to transmit information about at least one wavelength range to at least one optical network unit, which needs to be configured. By using all available communication wavelengths, respectively possible communication channels for this transmission and preferably using a unidirectional broadcast to transmit the respective information it is ensured, that all physically connected optical network units will be able to receive the transmitted information no matter to which communication wavelength their optical receivers are at present adjusted.

Favourably a further embodiment of the method according to the present invention ensures, that an optical network unit adjusts its optical transmitter to transmit in the first wavelength subset, respectively the corresponding transmission channel and thus allows for a self-configuration of the respective optical network unit once it is connected to the optical line termination.

In advantageous fashion according to a further embodiment of the present invention an optical network unit transmits its individual identification to the optical line termination using the first wavelength subset for transmission it has itself tuned to, because by this procedure in an easy fashion it is communicated to the optical line termination that the first wavelength subset is now occupied and at the same time communicated which optical network unit uses the corresponding communication channel.

Advantageously according to a further embodiment of the method according to the present invention a first identification of an optical network unit is associated to a first wavelength subset in building a first occupied list at the optical line termination, because this method in an efficient manner ensures that a list of available and free communication- wavelengths /-channels can be built, which in a subsequent communication step may be communicated to other optical network units which are connected but yet not tuned in and still search for free communication channels.

In an expedient way at a further embodiment of the present invention the first occupied list is stored for a certain prescribed time period. This methodology ensures that an optical network unit which disconnects when shutting down, later on reboots and tries to reconnect finds within the prescribed time period that its previous communication channel is still available and thus no cumbersome wavelength allocation process needs to be performed in case a corresponding optical network unit reboots and reconnects within the prescribed time period wherein the first occupied list is kept. This speeds up the tune in procedure especially in cases where the wavelength tune speed of the optical network unit is low. For instance, some lasers have a tune speed of a multiple seconds or minutes and by using the mechanism of the embodiment of the invention a tune in may happen in less than 50 ms. Such a fast tune-in procedure allows for power saving modes where an optical network may be switched off completely during times of no activity.

By broadcasting a second wavelength subset together with the first occupied list to an optical network unit according to a further embodiment of the present invention it is ensured in a beneficial way, that an optical network unit which is listed in the first occupied list may realize, that no collision with another connection attempt of another optical network unit took place. For instance, an optical network unit identification may in a beneficial fashion be a factory burned in ID, e.g. an Ethernet address or an MAC address or may be a randomly generated number generated by the optical network unit for every connection to the optical line termination. In a beneficial way instead of using a standard collision prevention mechanism using a back off timer which is started with a random timer value after a collision has happened, in an advantageous way the present invention may use instead of the back off timer the tuning to another free wavelength. Thus the use of a collision prevention mechanism may be avoided and a tuning respectively adjusting of the optical transmitter of the respective optical network unit is faster.

Another embodiment of the present invention expediently provides a list as information that allocates a wavelength to an identification of respective optical network units, respectively tags different wavelengths using the tags "free", "used", or "reserved for ID" in terms of performing a pre-reservation. By this method it is beneficially ensured, that an optical network unit may read its broadcast individual wavelength while receiving at an arbitrary wavelength and thus is able to adjust its transmitter very quickly.

According to a further embodiment of the present invention in advantageous fashion a first optical line termination is capable of receiving third information about an available wavelength range of the total wavelength spectrum usable by a second optical line termination. By this configuration and method it is ensured, that an optical network may be adapted to an increased number of wavelengths or services, respectively transmission channels. In particular in an advantageous fashion a respective optical line termination may merge its own list of available transmission wavelengths, the Almanac, with the available wavelengths for communication of another optical line termination. In an advantageous manner the optical line termination may communicate with each other via a separate communication link, the core network, or may receive information of available communication wavelengths of another optical line termination from an optical network unit that is connected to two optical line terminations and feeds back the respective information. This provides the considerable advantage that an optical network unit requires not to search for a list from a particular optical line termination, because all the lists contain all the required information of respective usable communication wavelengths or services.

In a beneficial way according to a further embodiment of the present invention a communication scheme is broadcasted over the first communication channel, because from the communication scheme, for instance a coarse wavelength division multiplexing scheme CWDM and from the transmission wavelength it is using at present an optical network unit may decide upon its associated CWDM band and is capable of drawing a conclusion about available communication wavelengths according to the communication scheme. In particular in an advantageous fashion an optical network unit required to allocate a different communication wavelength may use a wavelength in the neighbourhood of the wavelength it previously used according to the broadcast communication scheme and a search of a usable communication wavelength is narrowed down to a communication band according to the broadcast communication scheme. Thus the search time for a free wavelength is minimized.

In an advantageous fashion according to a further embodiment of the method according to the present invention a nominal wavelength is transmitted by an optical line termination, which allows an optical network unit receiving a corresponding signal to compare its nominal wavelength setting with the one received from the optical line termination and thus is capable of performing a corresponding calibration and to compensate for tolerances and drifts due to temperature sensitivity and aging of a large tuning range, which again speeds up an adjustment/tuning-in procedure of the optical transmitter/receiver of a respective optical network unit.

According to a further embodiment of the method according to the present invention in an advantageous fashion transmits a configuration parameter required to adjust a particular optical transmitter to a particular wavelength, because this in an initial phase of building up a connection between the optical line termination and the respective optical network unit speeds up the connecting process as configuration parameters like power level, wavelength respectively modulation scheme need not to be tried in multiple options by the optical network unit to connect successfully to the optical line termination.

In an advantageous fashion a further embodiment of the method according to the present invention is capable of switching off communication channels which are not needed of an optical line termination and at the same time maintain a number of free channels for potential new optical network units which are to be newly attached to the access,network.

Of particular advantage is a further embodiment of the method according to the present invention using ultra dense wavelength division multiplexing, because it allows for high transmission rates in combination with a high number of subscriber premises equipments and optical network units in such an environment may be configured in an efficient manner.

Of particular advantage is a system for establishing an optical communication link according to the present invention because it combines an optical network according to the present invention with a suitable method according to the present invention capable to establish an optical communication link for wavelength division multiplexing transmission and thus constitutes an optimum example for implementing the present invention in an efficient manner.

Further below embodiments of the present invention will be further described by way of examples in figures of which
- Fig. 1: shows an example of an optical network;
- Fig. 2: shows an example of a communication flow to establish an optical communication link;
- Fig. 3: shows an example of a communication flow for establishing an optical communication link and providing a feedback information to an optical line termination;
- Fig. 4: shows an example of an optical line termination and
- Fig. 5: shows an example of an optical network unit.

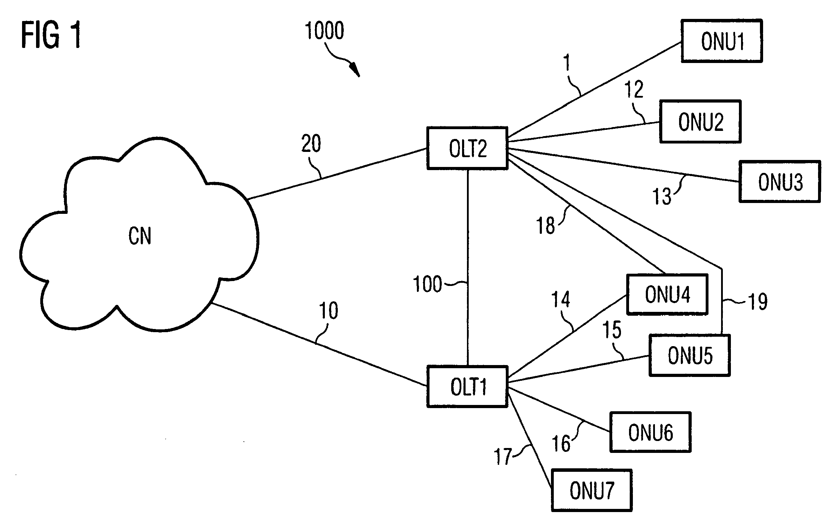

Fig. 1 shows an example of an optical network 1000 comprised of a first optical line termination OLT1 and a second optical line termination OLT2. The optical line terminations are respectively connected to a core network CN by communication lines 20 and 10. Furthermore the optical line terminations may communicate over a separate communication line 100. Connected via optical interconnections 11, 12 and 13 to the second optical line termination OLT2 are respectively optical network units ONU1, ONU2 and ONU3. In a similar way connected to the first optical line termination OLT1 are connected by optical interconnections 14, 15, 16 and 17 respectively optical network units ONU4, ONU5, ONUS6 and ONU7. Contrary to the direct connection to the optical line termination OLT1 shown in Fig. 1 the optical network units ONU1 to ONU7 may also be connected via an optical connection line and an optical splitter from which the optical interconnections 11, 12, 13 respectively start. Observing Fig. 1 closely one realises that some of the optical network units like ONU4 and ONU5 are connected to two optical line terminations in particular ONU4 is connected by optical interconnection 18 to OLT2 and optical network unit ONUS is connected by optical interconnection to optical line termination OLT2.

Such a configuration may be required when multiple optical line terminations are used to increase the number of wavelengths or to handle different services. In such a case, an optical network unit ONU4 may be receiving information that is broadcast from a first optical line termination OLT1 and a second optical line termination OLT2 and may feedback the received information to a respective different optical line termination. The same may be the case for another optical network unit like ONUS. For example, a first optical line termination OLT1 may broadcast information about free or used communication wavelengths in form of a first Almanac and a different second optical line termination OLT2 may broadcast a different second Almanac. Complete information may be provided to different optical network units ONU1 to ONU7 by either merging different Almanacs which are either communicated directly among different optical line terminations, here OLT1 and OLT2, or via the backbone of the carrier respectively the core network CN. An optical line termination may include a separate list of hosted Almanacs as opaque elements e.g. an XML data format would allow including opaque data. In order to be able to track changes in an Almanac which is cross-communicated across the access network an optical line termination may individually sign its respective Almanac with a digital signature.

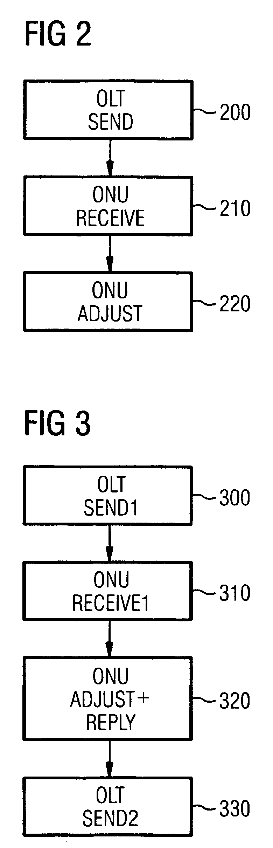

Fig. 2 shows an example of a communication flow in order to establish an optical communication link for wavelength division multiplexing transmission. At a communication block 200 an optical line termination sends, respectively broadcasts on a first channel using all of the available wavelengths of the optical line termination for wavelength division multiplexing, a first information about at least one wavelength range respectively a single wavelength which is available for communication out of the total wavelength spectrum usable by the first optical line termination OLT1 for wavelength division multiplexing transmission, as a first wavelength subset. At communication block 210 an optical network unit receives the first information about the first wavelength subset on an arbitrary wavelength its optical transmitter/receiver is tuned at present, and identifies the first wavelength subset as one that can be used for communication via wavelength division multiplexing transmission. In another block 220 the optical network unit adjusts at least its optical transmitter to transmit, and if needed also adjusts its optical receiver to respectively receive in the first wavelength subset, respectively tuning in to a first available communication channel which corresponds to the first wavelength subset.

Fig. 3 shows a further example of a communication flow to establish an optical communication link for wavelength division multiplexing transmission. Blocks 300, 310 and 320 are very similar to Blocks 200 to 220 which have been explained in the context of Fig. 2. In addition at 320 of Fig. 3 after adjusting at least its optical transmitter to transmit in the first wavelength subset the optical network unit transmits its own identification in using the first wavelength subset to the optical line termination which allows the optical line termination at 330 to store the identification of the optical network unit together with the first wavelength subset in a list. This list may for instance also store further available communication wavelengths and respective information about if they are free, or if they are used. In a further block at 330 the optical line termination may then send another information of a further available second wavelength subset which may be used for optical communication together with information about the optical network unit that is using the first wavelength subset in order to inform the respective optical network unit that no collision occurred while setting up the link and to allow other optical network units to establish an optical communication link in avoiding the first wavelength subset. An identification of an optical network unit may be for example an identification which is burned in at the factory like an Ethernet address or a MAC address or may be a randomly generated number.

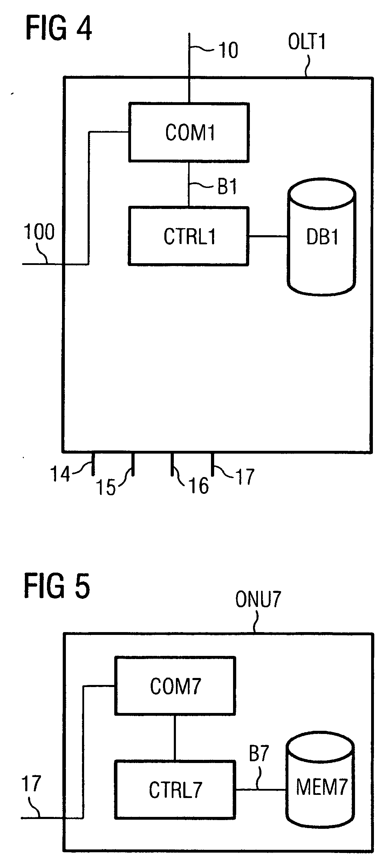

Fig. 4 shows an example of an optical line termination OLT1 having a communication section COM1, a control section CTRL1 and a database DB1. The optical line termination is connected to a core network via an optical interconnection 10 and to various optical network units via optical interconnections 14, 15, 16 and 17. It may further communicate with other optical line terminations using the separate interconnection 100. For instance an Almanac may be communicated in such a way.

Internal sections of the optical line termination OLT1 are connected by a bus connection B1. The communication section COM1 of the optical line termination OLT1 is capable of wavelength division multiplexing communication and in particular of ultra dense wavelength division multiplexing transmission. A control section of the optical line termination OLT1 may control the communication section COM1 in order to broadcast signals on all communication wavelengths that are available for optical communication according to the hardware equipment of the communication section COM1 in the optical line termination 1 or may select individual communication wavelengths respectively a wavelength subset for communication with different optical network units via optical interconnections 14, 15, 16 or 17.

In a database DB1 of the optical line termination OLT1 an Almanac, respectively a list of optical network units and optical wavelengths, respectively ranges of optical wavelengths that they use for optical communication may be stored in association to each other. Furthermore available communication wavelengths for wavelength division multiplexing communication which may be occupied by different network units and used to establish an optical communication link may be stored as well and tagged with "used" or "free" or "reserved for a certain identification".

The control section CTRL1 of the optical line termination OLT1 may provide a function of a power-saving mode for the optical line termination. For example, the optical line termination OLT1 may offer a maximum of n channels, respectively wavelengths for communication using wavelength division multiplexing. However, not all of the n channels may be required to be active all the time. As for example some optical network units are switched off, in some cases only m channels may be used, where m << n. In this case the optical line termination may be in a situation where it is allowed to switch off some channels without endangering new optical network units trying to connect to the optical line termination OLT1 not to find a free available wavelength subset, respectively communication channel. To this end the control section CTRL1 ensures that m+r channels are kept operational. For instance, the m+r channels are listed in the Almanac, wherein m channels are listed tagged as "used" and r channels are listed tagged as "free", In case an optical network unit is attempting to establish a communication link with the optical line termination OLT1 it is capable of finding at least one free wavelength in a broadcast Almanac. In case a plurality of optical network units attempt to connect to the optical line termination OLT1 the number of operational channels is successively increased until the maximum of n channels is reached.

It is also possible instead of activating/deactivating single communication channels respectively wavelength subsets to group a number of communication channels and to switch them on/off at the same time. This is especially advantageous, in a case, where a power consuming hardware resource handlers groups of channels.

By this power-saving mode provided through the control section CTRL1 an optical line termination may save power during periods of less activity. Separately switching off communication channels poses no problem for optical network units attempting to establish an optical communication link with the optical line termination OLT1 because by a broadcast on the first channel the available communication channels are communicated to all the optical network units.

Fig. 5 shows an example of an embodiment of an optical network unit ONU7. Among other components the optical network unit ONU7 comprises a communication section COM7, a control section CTRL7, a memory MEM7 and the respective sections are connected by an interconnection bus B7. The optical network unit ONU7 may communicate over an optical interconnection with a corresponding optical line termination like for example the optical line termination OLT1 described in the context of Fig. 4.

In particular the optical network unit ONU7 stores an identification of itself in the memory section MEM7. Here the memory section MEM7 may be a separate memory which is an onboard memory or may be included in a memory section of a microprocessor which for example is part of the control section CTRL7. The communication section COM7 for example comprises a transmitter and a receiver adapted for wavelength division multiplexing communication and in particular for ultra dense wavelength division multiplexing transmission.

The communication section COM7 comprises for instance a tuneable narrowband receiver and is capable to adjust a received and transmitted wavelength, respectively select a received wavelength by using a tuneable narrowband filter.

Due to aging and temperature drifts such an adjustable transmitter may require a frequent calibration of its parameters. Therefore, the memory section MEM7 may store a relationship between an internal tuning value, in form of a tuning voltage and a nominal value corresponding to a nominal wavelength which is received via the optical interconnection 17. In particular the optical network unit ONU7 is adapted to adjust at least its optical transmitter to a first wavelength subset it receives over the optical interconnection 17 and then to transmit via wavelength division multiplexing transmission in the first wavelength subset it has adjusted to, corresponding to a communication channel. The memory section MEM7 may also store an individual identification of the optical network unit ONU7. The control unit CTRL7 may cause the communication section COM7 using the tuned wavelength, respectively wavelength subset or communication channel to send the identifcation. In an extreme case a wavelength range according to the present invention may only refer to a single wavelength.

## Claims

1. Optical line termination (OLT1, OLT2) comprising first communication means (COM1) for wavelength division multiplexing transmission and adapted to broadcast to a plurality of optical network units (ONU1, ..., ONU7) using all wavelengths of the optical line termination (OLT1, OLT2) available for wavelength division multiplexing transmission, a first control signal indicating at least one wavelength or wavelength range out of the total wavelength spectrum usable for wavelength division multiplexing transmission which is available for communication, as a first wavelength subset, in order to establish an optical communication link for wavelength division multiplexing transmission between said optical line termination (OLT1, OLT2) and an optical network unit (ONU1, ..., ONU7); **characterised by** said optical line termination (OLT1, OLT2) being further adapted to receive, from one of said plurality of optical network units (ONU1, ..., ONU7), an identification signal transmitting an individual identification of said one of said plurality of optical network units (ONU1, ..., ONU7), said identification signal using for transmission said first wavelength subset to which said one of said plurality of optical network units (ONU1, ..., ONU7) has itself tuned, said identification signal communicating that said first wavelength subset is now occupied and which of said plurality of optical network units (ONU1, ..., ONU7) uses said optical communication link.

2. Optical line termination (OLT1, OLT2) according to claim 1, **wherein** the optical line termination (OLT1, OLT2) further comprises first storing means (DB1) for storing the first wavelength subset in association to the identification.

3. Optical network unit (ONU1, ...., ONU7) comprising second communication means (COM7) for wavelength division multiplexing transmission and adapted to receive a first control signal indicating a wavelength range out of the total wavelength spectrum usable for wavelength division multiplexing transmission as a first wavelength subset, **wherein** the second communication means (COM7) is adapted to automatically self-adjust its frequency range for optical communication by wavelength division multiplexing transmission to the first wavelength subset to establish an optical communication link for wavelength division multiplexing transmission between an optical line termination (OLT1, OLT2) and said optical network unit (ONU1, ..., ONU7);
wherein said optical network unit (ONU1, ..., ONU7) is further adapted to transmit its individual identification to said optical line termination (OLT1, OLT2) using said first wavelength subset, thereby communicating to said optical line termination (OLT1, OLT2) that said first wavelength subset is now occupied and which optical network unit (ONU1, ..., ONU7) uses said optical communication link.

4. Optical network unit (ONU1, ..., ONU7) according to claim 3, further comprising memory means (MEM7) for storing a first identification of the optical network unit (ONU1, ..., ONU7), wherein the second communication means (COM7) is adapted to transmit a second control signal indicating the first identification using the first wavelength subset.

5. Optical network (1000) comprising at least one optical line termination (OLT1, OLT2) according to claim 1 or 2 and at least one optical network unit (ONU1, ..., ONU7) according to claim 3 or 4, **wherein** the at least one optical line termination (OLT1, OLT2) and the at least one optical network unit (ONU1, ..., ONU7) are connected by an optical interconnection, and wherein the first communication means (COM1) is adapted to receive the identification signal from the second communication means (COM7) and the second communication means (COM7) is adapted to receive the first control signal from the first communication means (COM1).

6. Method for establishing an optical communication link for wavelength division multiplexing transmission between a first optical line termination (OLT1, OLT2) and a plurality of optical network units (ONU1, ..., ONU7), **wherein** the first optical line termination (OLT1, OLT2) broadcasts (200) on all wavelengths of the optical line termination (OLT1, OLT2) available for wavelength division multiplexing transmission, a first information about at least one wavelength or wavelength range out of the total wavelength spectrum usable by the first optical line termination (OLT1, OLT2) for wavelength division multiplexing transmission that is available for communication, as a first wavelength subset, to the plurality of optical network units (ONU1, ... , ONU7);
**wherein** a first optical network unit (ONU1, ..., ONU7) receives the first information (210) and automatically self-adjusts its optical transmitter to transmit in the first wavelength subset (220); and **characterised in that**
the first optical network unit (ONU1, ..., ONU7) transmits a first identification of itself to the first optical line termination (OLT1, OLT2) using the first wavelength subset for transmission (320), thereby communicating to said first optical line termination (OLT1, OLT2) that said first wavelength subset is now occupied and which of said plurality of optical network units (ONU1, ..., ONU7) uses said optical communication link.

7. Method according to claim 6, **wherein** the first optical line termination (OLT1, OLT2) receives the first identification and stores the first identification associated to the first wavelength subset as a first occupied list.

8. Method according to claim 7, **wherein** the first optical line termination (OLT1, OLT2) broadcasts the first occupied list together with a second information about at least one wavelength or wavelength range out of the total wavelength spectrum usable by the optical line termination (OLT1, OLT2) that is available for communication as a second wavelength subset to at least one optical network unit (ONU1, ..., ONU7).

9. Method according to claim 7, **wherein** the first occupied list is stored for a certain prescribed time period.

10. Method according to any of the claims 6 to 9, **wherein** the first optical line termination (OLT1, OLT2) receives a third information about at least one wavelength or wavelength range out of the total wavelength spectrum usable by a second line termination (OLT1, OLT2) for wavelength division multiplexing transmission that is available for communication, as a third wavelength subset and broadcasts the third information on a first channel using all wavelengths of the first optical line termination (OLT1, OLT2).

11. Method according to any of the claims 6 to 10, **wherein** the first optical line termination (OLT1, OLT2) broadcasts on the first channel a scheme for wavelength division multiplexing.

12. Method according to any of the claims 6 to 11, **wherein** the first optical line termination (OLT1, OLT2) broadcasts a nominal wavelength.

13. Method according to any of the claims 6 to 12, **wherein** the first optical line termination (OLT1, OLT2) transmits a configuration parameter for adjusting the optical transmitter to the first wavelength subset.

14. Method according to any of the claims 6 to 13, **wherein** the first optical line termination (OLT1, OLT2) monitors a number of free channels/wavelength subsets that are available for communication, and if the number of free channels/wavelengths or wavelength subsets exceeds a predefined threshold switches off at least one channel/wavelength or wavelength subset.

15. Method according to any of the claims 6 to 14 using ultra dense wavelength division multiplexing transmission.

16. System for establishing an optical communication link comprising an optical network according to claim 5, and adapted to implement a method according to any of the claims 6 to 15.

## Patentansprüche

1. OLT-Einheit (OLT1, OLT2) mit einem ersten Kommunikationsmittel (COM1) für eine Wellenlängen-Multiplexübertragung und eingerichtet zum Senden an mehrere optische Netzwerkeinheiten (ONU1, ..., ONU7) unter Verwendung aller Wellenlängen der OLT-Einheit (OLT1, OLT2), welche für die Wellenlängen-Multiplexübertragung verfügbar sind, eines ersten Steuerungssignals, welches wenigstens eine für die Kommunikation verfügbare Wellenlänge oder einen für die Kommunikation verfügbaren Wellenlängenbereich aus dem gesamten Wellenlängenspektrum, welches für die Wellenlängen-Multiplexübertragung nutzbar ist, als eine erste Wellenlängen-Teilmenge angibt als eine erste Wellenlängen-Teilmenge, um einen optischen Übertragungskanal für die Wellenlängen-Multiplexübertragung zwischen der OLT-Einheit (OLT1, OLT2) und einer optischen Netzwerkeinheit (ONU1, ..., ONU7) bereitzustellen;
**dadurch gekennzeichnet, dass** die OLT-Einheit (OLT1, OLT2) ferner dazu eingerichtet ist, von einer der optischen Netzwerkeinheiten (ONU1, ..., ONU7) ein Identifikationssignal, welches eine individuelle Identifikation der optischen Netzwerkeinheit (ONU1, ..., ONU7) überträgt, zu empfangen, wobei das Identifikationssignal zum Übertragen die erste Wellenlängen-Teilmenge, auf welche sich die optische Netzwerkeinheit (ONU1, ..., ONU7) abgestimmt hat, nutzt und kommuniziert, dass die erste Wellenlängen-Teilmenge nun besetzt ist und welche der mehreren optischen Netzwerkeinheiten (ONU1, ..., ONU7) den optischen Übertragungskanal nutzt.

2. OLT-Einheit (OLT1, OLT2) nach Anspruch 1, bei welcher die OLT-Einheit (OLT1, OLT2) ferner erste Speichermittel (DB1) zum Speichern der ersten Wellenlängen-Teilmenge in Verbindung mit der Identifizierung umfasst.

3. Optische Netzwerkeinheit (ONU1, ..., ONU7) mit zweiten Kommunikationsmitteln (COM7) für eine Wellenlängen-Multiplexübertragung und eingerichtet zum Empfangen eines ersten Steuerungssignals, welches einen Wellenlängenbereich aus dem gesamten für die Wellenlängen-Multiplexübertragung nutzbaren Wellenlängenspektrum als eine erste Wellenlängen-Teilmenge angibt, wobei das zweite Kommunikationsmittel (COM7) dazu eingerichtet ist, seinen Frequenzbereich für die optische Kommunikation mittels Wellenlängen-Multiplexübertragung automatisch selbst auf die erste Wellenlängen-Teilmenge einzustellen, um einen optischen Übertragungskanal für die Wellenlängen-Multiplexübertragung zwischen einer OLT-Einheit (OLT1, OLT2) und der optischen Netzwerkeinheit (ONU1, ..., ONU7) bereitzustellen;
wobei die optische Netzwerkeinheit (ONU1, ..., ONU7) ferner dazu eingerichtet ist, ihre individuelle Identifizierung unter Verwendung der ersten Wellenlängen-Teilmenge an die OLT-Einheit (OLT1, OLT2) zu übertragen, um dadurch an die OLT-Einheit (OLT1, OLT2) zu übermitteln, dass die erste Wellenlängen-Teilmenge nunmehr besetzt ist und welche optische Netzwerkeinheit (ONU1, ..., ONU7) den optischen Übertragungskanal nutzt.

4. Optische Netzwerkeinheit (ONU1, ..., ONU7) nach Anspruch 3 mit zusätzlich Speichermitteln (MEM7) zum Speichern einer ersten Identifikation der optischen Netzwerkeinheit (ONU1, ..., ONU7), wobei das zweite Kommunikationsmittel (COM7) zum Übertragen eines zweiten Steuerungssignals, welches die erste Identifikation anzeigt, unter Verwendung der ersten Wellenlängen-Teilmenge eingerichtet ist.

5. Optisches Netzwerk (1000) mit wenigstens einer OLT-Einheit (OLT1, OLT2) nach Anspruch 1 oder 2 und wenigstens einer optischen Netzwerkeinheit (ONU1, ..., ONU7) nach Anspruch 3 oder 4, wobei die wenigstens eine OLT-Einheit (OLT1, OLT2) und die wenigstens eine optische Netzwerkeinheit (ONU1, ..., ONU7) mittels einer optischen Verbindung verbunden sind und wobei das erste Kommunikationsmittel (COM1) zum Empfangen des Identifikationssignals von dem zweiten Kommunikationsmittel (COM7) eingerichtet ist und das zweite Kommunikationsmittel (COM7) zum Empfangen des ersten Steuerungssignals von dem ersten Kommunikationsmittel (COM1) eingerichtet ist.

6. Verfahren zum Bereitstellen eines optischen Übertragungskanals für eine Wellenlängen-Multiplexübertragung zwischen einer ersten OLT-Einheit (OLT1, OLT2) und mehreren optischen Netzwerkeinheiten (ONU1, ..., ONU7), wobei die erste OLT-Einheit (OLT1, OLT2) auf allen Wellenlängen der OLT-Einheit (OLT1, OLT2), welche für die Wellenlängen-Multiplexübertragung verfügbar sind, eine erste Information über wenigstens eine für die Kommunikation zur Verfügung stehende Wellenlänge oder wenigstens einen für die Kommunikation zur Verfügung stehenden Wellenlängenbereich aus dem gesamten Wellenlängenspektrum, welches von der ersten OLT-Einheit für die Wellenlängen-Multiplexübertragung nutzbar ist, als eine erste Wellenlängen-Teilmenge an die mehreren optischen Netzwerkeinheiten (ONU1, ..., ONU7) sendet (200);
wobei eine erste optische Netzwerkeinheit (ONU1, ..., ONU7) die erste Information empfängt (210) und ihre optische Übertragungseinheit automatisch selbst einstellt, um in der ersten Wellenlängen-Teilmenge zu senden (220);
**dadurch gekennzeichnet, dass** die erste optische Netzwerkeinheit (ONU1, ..., ONU7) eine erste Identifikation ihrer selbst an die erste OLT-Einheit (OLT1, OLT2) unter Verwendung der ersten Wellenlängen-Teilmenge für die Übertragung sendet (320), um damit der ersten OLT-Einheit (OLT1, OLT2) mitzuteilen, dass die erste Wellenlängen-Teilmenge nunmehr besetzt ist und welche der optischen Netzwerkeinheiten (ONU1, ..., ONU7) den optischen Übertragungskanal nutzt.

7. Verfahren nach Anspruch 6, bei welchem die erste OLT-Einheit (OLT1, OLT2) die erste Identifikation empfängt und die erste Identifikation, welche mit der ersten Wellenlängen-Teilmenge verbunden ist, als eine erste besetzte Liste speichert.

8. Verfahren nach Anspruch 7, bei welchem die erste OLT-Einheit (OLT1, OLT2) die erste besetzte Liste zusammen mit einer zweiten Information über wenigstens eine Wellenlänge oder einen Wellenlängenbereich aus dem gesamten von der OLT-Einheit (OLT1, OLT2) nutzbaren Wellenlängenspektrum, welches für die Kommunikation als eine zweite Wellenlängen-Teilmenge verfügbar ist, an wenigstens eine optische Netzwerkeinheit (ONU1, ..., ONU7) sendet.

9. Verfahren nach Anspruch 7, bei welchem die erste besetzte Liste für eine vorbestimmte Zeitspanne gespeichert wird.

10. Verfahren nach einem der Ansprüche 6 bis 9, bei welchem die erste OLT-Einheit (OLT1, OLT2) eine dritte Information über wenigstens eine Wellenlänge oder einen Wellenlängenbereich aus dem gesamten von einer zweiten OLT-Einheit (OLT1, OLT2) für die Wellenlängen-Multiplexübertragung nutzbaren Wellenlängenspektrum, welches für die Kommunikation als eine dritte Wellenlängen-Teilmenge verfügbar ist, empfängt und die dritte Information auf einem ersten Kanal unter Verwendung aller Wellenlängen der ersten OLT-Einheit (OLT1, OLT2) sendet.

11. Verfahren nach einem der Ansprüche 6 bis 10, bei welchem die erste OLT-Einheit (OLT1, OLT2) auf dem ersten Kanal ein Schema für das Wellenlängen-Multiplexen sendet.

12. Verfahren nach einem der Ansprüche 6 bis 11, bei welchem die erste OLT-Einheit (OLT1, OLT2) eine nominale Wellenlänge sendet.

13. Verfahren nach einem der Ansprüche 6 bis 12, bei welchem die erste OLT-Einheit (OLT1, OLT2) einen Konfigurationsparameter zum Anpassen der optischen Übertragungseinheit an die erste Wellenlängen-Teilmenge überträgt.

14. Verfahren nach einem der Ansprüche 6 bis 13, bei welchem die erste OLT-Einheit (OLT1, OLT2) eine Anzahl von freien Kanälen/Wellenlängen-Teilmengen, welche für die Kommunikation verfügbar sind, überwacht und wenigstens einen Kanal/eine Wellenlänge oder wenigstens eine Wellenlängen-Teilmenge abschaltet, sofern die Anzahl der freien Kanälen/Wellenlängen oder Wellenlängen-Teilmengen einen vordefinierten Schwellwert überschreitet.

15. Verfahren nach einem der Ansprüche 6 bis 14 unter Verwendung einer ultradichten Wellenlängen-Multiplex-Übertragung.

16. System zum Bereitstellen eines optischen Übertragungskanals mit einem optischen Netzwerk gemäß Anspruch 5 und eingerichtet zum Ausführen eines Verfahrens gemäß einem der Ansprüche 6 bis 15.

## Revendications

1. Terminaison de ligne optique (OLT1, OLT2) comprenant des premiers moyens de communication (COM1) pour une transmission par multiplexage par répartition en longueurs d'onde et conçus pour diffuser, vers une pluralité d'unités de réseau optique (ONU1, ..., ONU7) utilisant toutes les longueurs d'onde de la terminaison de ligne optique (OLT1, OLT2) disponibles pour une transmission par multiplexage par répartition en longueurs d'onde, un premier signal de commande indiquant au moins une longueur d'onde ou une plage de longueur d'onde dans le spectre de longueur d'onde total utilisable pour une transmission par multiplexage par répartition en longueurs d'onde qui est disponible pour une communication, en tant que premier sous-ensemble de longueurs d'onde, afin d'établir une liaison de communication optique pour une transmission par multiplexage par répartition en longueurs d'onde entre ladite terminaison de ligne optique (OLT1, OLT2) et une unité de réseau optique (ONU1, ..., ONU7) ; **caractérisée en ce que**
ladite terminaison de ligne optique (OLT1, OLT2) est en outre conçue pour recevoir, de l'une de ladite pluralité d'unités de réseau optique (ONU1, ..., ONU7), un signal d'identification transmettant une identification individuelle de ladite une de ladite pluralité d'unités de réseau optique (ONU1, ..., ONU7), ledit signal d'identification utilisant pour la transmission dudit premier sous-ensemble de longueurs d'onde avec lequel ladite une de ladite pluralité d'unités de réseau optique (ONU1, ..., ONU7) s'est elle-même accordée, ledit signal d'identification indiquant que ledit premier sous-ensemble de longueurs d'onde est maintenant occupé et quelle unité parmi ladite pluralité d'unités de réseau optique (ONU1, ..., ONU7) utilise ladite liaison de communication optique.

2. Terminaison de ligne optique (OLT1, OLT2) selon la revendication 1, dans laquelle la terminaison de ligne optique (OLT1, OLT2) comprend en outre des premiers moyens de mémorisation (DB1) pour mémoriser le premier sous-ensemble de longueurs d'onde en association avec l'identification.

3. Unité de réseau optique (ONU1, ..., ONU7) comprenant des deuxièmes moyens de communication (COM7) pour une transmission par multiplexage par répartition en longueurs d'onde et conçue pour recevoir un premier signal de commande indiquant une plage de longueur d'onde dans le spectre de longueur d'onde total utilisable pour une transmission par multiplexage par répartition en longueurs d'onde en tant que premier sous-ensemble de longueurs d'onde, dans laquelle les deuxièmes moyens de communication (COM7) sont conçus pour ajuster automatiquement leur plage de fréquence pour une communication optique par une transmission par multiplexage par répartition en longueurs d'onde au premier sous-ensemble de longueurs d'onde pour établir une liaison de communication optique pour une transmission par multiplexage par répartition en longueurs d'onde entre une terminaison de ligne optique (OLT1, OLT2) et ladite unité de réseau optique (ONU1, ..., ONU7) ;
dans laquelle ladite unité de réseau optique (ONU1, ..., ONU7) est en outre conçue pour transmettre son identification individuelle à ladite terminaison de ligne optique (OLT1, OLT2) en utilisant ledit premier sous-ensemble de longueurs d'onde, indiquant de ce fait à ladite terminaison de ligne optique (OLT1, OLT2) que ledit premier sous-ensemble de longueurs d'onde est maintenant occupé et quelle unité de réseau optique (ONU1, ..., ONU7) utilise ladite liaison de communication optique.

4. Unité de réseau optique (ONU1, ..., ONU7) selon la revendication 3, comprenant en outre
des moyens formant mémoire (MEM7) pour mémoriser une première identification de l'unité de réseau optique (ONU1, ..., ONU7), dans laquelle les deuxièmes moyens de communication (COM7) sont conçus pour transmettre un deuxième signal de commande indiquant la première identification en utilisant le premier sous-ensemble de longueurs d'onde.

5. Réseau optique (1000) comprenant au moins une terminaison de ligne optique (OLT1, OLT2) selon la revendication 1 ou 2 et au moins une unité de réseau optique (ONU1, ..., ONU7) selon la revendication 3 ou 4, dans lequel ladite au moins une terminaison de ligne optique (OLT1, OLT2) et ladite au moins une unité de réseau optique (ONU1, ..., ONU7) sont connectées par une interconnexion optique, et dans lequel les premiers moyens de communication (COM1) sont conçus pour recevoir le signal d'identification des deuxièmes moyens de communication (COM7) et les deuxièmes moyens de communication (COM7) sont conçus pour recevoir le premier signal de commande des premiers moyens de communication (COM 1).

6. Procédé pour établir une liaison de communication optique pour une transmission par multiplexage par répartition en longueurs d'onde entre une première terminaison de ligne optique (OLT1, OLT2) et une pluralité d'unités de réseau optique (ONU1, ..., ONU7), dans lequel la première terminaison de ligne optique (OLT1, OLT2) diffuse (200), sur toutes les longueurs d'onde de la terminaison de ligne optique (OLT1, OLT2) disponibles pour une transmission par multiplexage par répartition en longueurs d'onde, des premières informations concernant au moins une longueur d'onde ou une plage de longueur d'onde dans le spectre de longueur d'onde total utilisable par la première terminaison de ligne optique (OLT1, OLT2) pour une transmission par multiplexage par répartition en longueurs d'onde qui est disponible pour une communication, en tant que premier sous-ensemble de longueurs d'onde, vers la pluralité d'unités de réseau optique (ONU1, ..., ONU7) ;
dans lequel une première unité de réseau optique (ONU1, ..., ONU7) reçoit les premières informations (210) et ajuste automatiquement son émetteur optique pour transmettre dans le premier sous-ensemble de longueurs d'onde (220) ; et **caractérisé en ce que**
la première unité de réseau optique (ONU1, ..., ONU7) transmet une première identification d'elle-même à la première terminaison de ligne optique (OLT1, OLT2) en utilisant le premier sous-ensemble de longueurs d'onde pour la transmission (320), indiquant de ce fait à ladite première terminaison de ligne optique (OLT1, OLT2) que ledit premier sous-ensemble de longueurs d'onde est maintenant occupé et quelle unité parmi ladite pluralité d'unités de réseau optique (ONU1, ..., ONU7) utilise ladite liaison de communication optique.

7. Procédé selon la revendication 6, dans lequel la première terminaison de ligne optique (OLT1, OLT2) reçoit la première identification et mémorise la première identification associée au premier sous-ensemble de longueurs d'onde en tant que première liste occupée.

8. Procédé selon la revendication 7, dans lequel la première terminaison de ligne optique (OLT1, OLT2) diffuse la première liste occupée avec des deuxièmes informations concernant au moins une longueur d'onde ou une plage de longueur d'onde dans le spectre de longueur d'onde total utilisable par la terminaison de ligne optique (OLT1, OLT2) qui est disponible pour une communication en tant que deuxième sous-ensemble de longueurs d'onde vers au moins une unité de réseau optique (ONU1, ..., ONU7).

9. Procédé selon la revendication 7, dans lequel la première liste occupée est mémorisée pendant une certaine période de temps prescrite.

10. Procédé selon l'une quelconque des revendications 6 à 9, dans lequel la première terminaison de ligne optique (OLT1, OLT2) reçoit des troisièmes informations concernant au moins une longueur d'onde ou une plage de longueur d'onde dans le spectre de longueur d'onde total utilisable par une deuxième terminaison de ligne (OLT1, OLT2) pour une transmission par multiplexage par répartition en longueurs d'onde qui est disponible pour une communication, en tant que troisième sous-ensemble de longueurs d'onde et diffuse les troisièmes informations sur un premier canal en utilisant toutes les longueurs d'onde de la première terminaison de ligne optique (OLT1, OLT2).

11. Procédé selon l'une quelconque des revendications 6 à 10, dans lequel la première terminaison de ligne optique (OLT1, OLT2) diffuse sur le premier canal une méthode pour un multiplexage par répartition en longueurs d'onde.

12. Procédé selon l'une quelconque des revendications 6 à 11, dans lequel la première terminaison de ligne optique (OLT1, OLT2) diffuse une longueur d'onde nominale.

13. Procédé selon l'une quelconque des revendications 6 à 12, dans lequel la première terminaison de ligne optique (OLT1, OLT2) transmet un paramètre de configuration pour ajuster l'émetteur optique au premier sous-ensemble de longueurs d'onde.

14. Procédé selon l'une quelconque des revendications 6 à 13, dans lequel la première terminaison de ligne optique (OLT1, OLT2) surveille un nombre de canaux/ sous-ensembles de longueurs d'onde libres qui sont disponibles pour une communication, et si le nombre de canaux/de longueurs d'onde ou de sous-ensembles de longueurs d'onde libres dépasse un seuil prédéfini, désactive au moins un canal/une longueur d'onde ou un sous-ensemble de longueurs d'onde.

15. Procédé selon l'une quelconque des revendications 6 à 14 utilisant une transmission par multiplexage par répartition en longueurs d'onde ultra dense.

16. Système pour établir une liaison de communication optique comprenant un réseau optique selon la revendication 5, et conçu pour mettre en oeuvre un procédé selon l'une quelconque des revendications 6 à 15.
